# EUROPEAN PATENT APPLICATION

(11) **EP 4 386 588 A1**
(43) Date of publication of application: **19.06.2024**
(21) Application number: 22306878.4
(22) Date of filing: 14.12.2022
(51) Int. Cl.: G06F 21/14, G06F 21/52, G06F 21/75

(54) **METHOD TO SECURE A SOFTWARE CODE AGAINST ATTACKS REQUIRING A KNOWLEDGE OF THE LOCATION OF DATA IN THE MEMORY STACK**

(71) Applicant: THALES DIS FRANCE SAS, 92190 Meudon (FR)
(72) Inventor: TEGLIA, Yannick, 92190 Meudon (FR); CHARBONNIER, Sylvain, 92190 Meudon (FR); BOURBAO, Eric, 92190 Meudon (FR)
(74) Representative: Bricks, Amélie

(57) **Abstract**

The present invention relates to a method for securing against physical or logical attacks a software code comprising a first sequence of instructions performing, when executed by an execution device, a function declaring a plurality of local variables to allocate a memory space of a memory stack to each local variable,
said method being performed by a first processor of a securing device and comprising the steps of:
- identifying (S1) said plurality of local variables allocated in said function,
- generating (S2) in the software code a second sequence of instructions, which, when executed at runtime by a second processor of said execution device, at each call of the function after said local variables have been declared :
• determines (E1) randomly a permutation P,
• shuffles (E2) the locations of the memory spaces allocated in said memory stack to said identified local variables by applying to them said determined permutation.

## Description

### FIELD OF THE INVENTION

The present invention relates to the field of data protection against physical or logical attacks. It discloses a method protecting against attacks requiring a knowledge of the location of data in the memory stack.

### BACKGROUND OF THE INVENTION

When a computer program is executed by any computer system, functions are called which use local variables to store inputs and outputs of the instructions performed by each function. Memory space on the memory stack is allocated to each local variable when it is encountered for the first time.

When several local variables of function are allocated, their positions on the memory stack depend on settings of the compiler used to compile the computer program but they are predetermined. They will be the same at each call of the function.

Such an information can be leveraged by an attacker to craft an efficient attack for fraudulently retrieving the value of data stored in the memory stack, for example in the frame of a side channel analysis attack by combining traces from multiple executions of the same function. It can also be used to trigger the execution of a malicious code, for example by stack smashing attacks, or it can be used to perform physical fault injection.

Side channel attacks may be difficult to perform successfully when data words are 32-bit long. Nevertheless, such 32-bit long words may in fact contain only a few bits, 8 for example, of useful data, other bits being padding. And retrieving 8 bits of data from memory by side channel analysis is much easier. Even when data words do contain 32 bits of useful data, data to be written in memory may not be fully aligned on 32-bit addresses. A 32-bits data may then be spread on two 32-bit words. One of these two words may in fact only contain the 8 most significant bits of the 32 bit data. In such a case, retrieving only these 8 bits would provide an attacker with a significant knowledge about the value of the 32-bit data.

In order to prevent such attacks, particularly in the case of data misalignment, solutions have been proposed which apply a randomization to the address space layout of the memory stack. Nevertheless such protections have several drawbacks. Some, such as ASLR or KASLR, only perform partial randomization by randomizing the start address of memory areas of the memory stack without randomizing the layout of information inside each area. When software-based, existing protection can be easily deactivated by an attacker before he performs its SCA attack or Fault injection attack. When hardware based, such protections apply the same randomization pattern during a whole session, which still allows to perform attacks combining traces from a single session. In addition, the applied randomization is often weak, for example by changing the addresses in the stack of a block of variables, without changing their relative position one with each other, which enables differential attacks.

Therefore, there is a need to improve the protection of data stored in the memory stack against SCA attacks and Fault attacks, such that an attacker could not perform such attacks with a session or based on relative address offsets of several variables, especially in the case of data misalignment.

### SUMMARY OF THE INVENTION

For this purpose and according to a first aspect, this invention therefore relates to a method for securing against physical or logical attacks a software code comprising a first sequence of instructions performing, when executed by an execution device, a function declaring a plurality of local variables to allocate a memory space of a memory stack to each local variable, said method being performed by a first processor of a securing device and comprising the steps of:
- identifying said plurality of local variables allocated in said function,
- generating in the software code a second sequence of instructions, which, when executed at runtime by a second processor of said execution device, at each call of the function after said local variables have been declared :
   - determines randomly a permutation P,
   - shuffles the locations of the memory spaces allocated in said memory stack to said identified local variables by applying to them said determined permutation.

It enables to change at runtime the location of local variables of the function on the memory stack, which prevents an attacker from being able to predict these locations and to use it for side channel or fault injection attacks. Since the shuffling is activated by a dedicated sequence of instructions in the compiled code within the code of the function itself, the shuffling is different at each execution of the function.

In an embodiment, said local variables are elements of an array C of size N, with N an integer, and said second sequence of instructions, when executed at runtime by said second processor of said execution device at each call of the function after array elements have been declared:
- determines randomly a first integer, called start, between 0 and N-1,
- determines randomly a second integer, called step, which is non-zero and coprime with N,
- determines said permutation as P[i] := [(start+i*step) modulo N] for i in {0, ... N-1},
- shuffles the locations of the memory spaces allocated to said array elements in said memory stack by applying to them said determined permutation P.

By doing so, the locations on the memory stack of the elements of an array are no longer stored in increasing index order and may instead have a random order determined at each execution of the function declaring the array.

The step of generation of a second sequence of instructions may be performed by a compiler compiling said software code or an interpreter interpreting it at runtime.

Each of said variables may have a length of several bytes and shuffling the locations of the memory spaces allocated to said variables may comprise for each variable shuffling the memory spaces corresponding to each byte of the variable.

This enables a deeper shuffling of the data on the memory stack, making it even harder for an attacker to predict the location on the memory stack it needs to attack by SCA or fault injection.

According to a second aspect, this invention relates to a non-transitory machine-readable storage medium encoded with instructions of a secure software code for secure execution by a second processor of an execution device, wherein:
- said secure software code is a modified version of an unsecure software code obtained by securing said unsecure software code according to the method according to the first aspect,
- the non-transitory machine-readable storage medium is encoded with :
   - a first sequence of instructions performing, when executed by an execution device, a function declaring a plurality of local variables to allocate a memory space of a memory stack to each local variable,
   - and a second sequence of instructions, which, when executed at runtime by a second processor of said execution device, at each call of the function after said local variables have been declared :
      ✔ determines randomly a permutation P,
      ✔ shuffles the locations of the memory spaces allocated to said identified local variables in said memory stack by applying to them said determined permutation.

According to a third aspect, this invention relates to a method of securely executing instructions of a secure software code by a second processor of an execution device,
- wherein said secure software code is a modified version of an unsecure software code obtained by securing said unsecure software code according to the method according to the first aspect and comprising said first sequence of instructions and said generated second sequence of instructions,
- and comprising, when said second sequence of instructions is executed at runtime by said second processor of said execution device, at each call of the function after said local variables have been declared, the steps of:
   ✔ determining randomly a permutation,
   ✔ shuffling the locations of the memory spaces allocated to said local variables in said memory stack by applying to them said determined permutation.

According to a fourth aspect, this invention relates to an electronic device comprising a processor configured for performing the steps of the method according to the first aspect.

According to a fifth aspect, this invention relates to an electronic device configured for performing the steps of the method according to the third aspect and comprising a cryptoprocessor comprising a true or pseudo randomness source configured for generating said permutation and a processor.

Such a non-transitory machine-readable storage medium according to the second aspect, method according to the third aspect and electronic devices according to the fourth and fifth aspect show the same advantages as the ones of the method according to the first aspect.

To the accomplishment of the foregoing and related ends, one or more embodiments comprise the features hereinafter fully described and particularly pointed out in the claims.

### BRIEF DESCRIPTION OF THE DRAWINGS

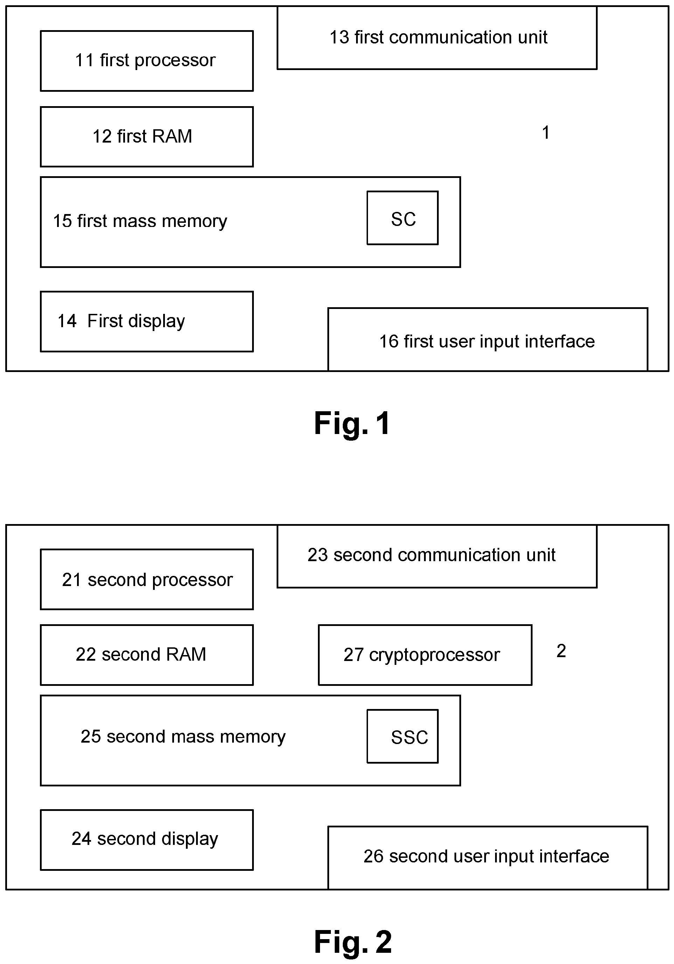

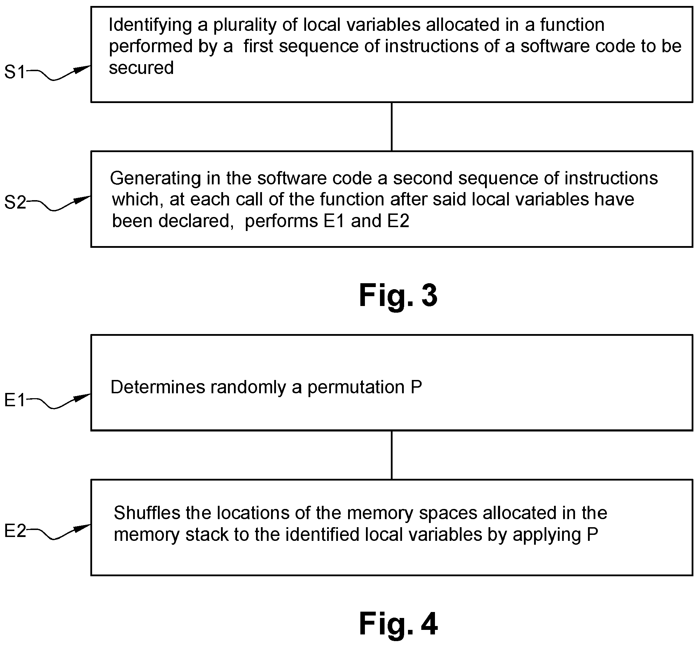

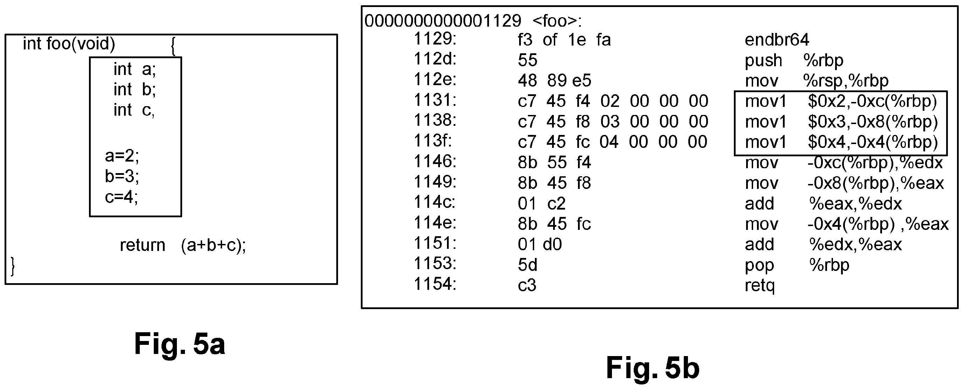

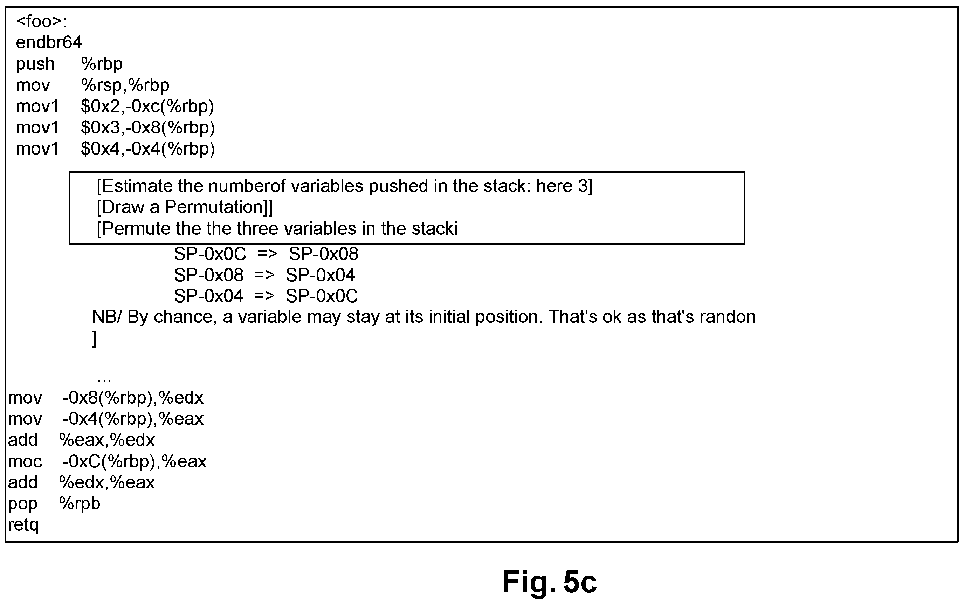

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
▪ Figure 1 illustrates schematically a securing device according to an embodiment of the present invention;
▪ Figure 2 illustrates schematically an execution device according to an embodiment of the present invention;
▪ Figure 3 illustrates schematically a method of securing a software code according to an embodiment of the present invention;
▪ Figure 4 illustrates schematically a method of executing instruction of a secure software code according to an embodiment of the present invention;
▪ Figure 5a, 5b, 5c illustrate an example according to an embodiment of the present invention.

### DETAILED DESCRIPTION OF EMBODIMENTS OF THE INVENTION

The invention aims at securing a software code executed by an execution device against any attack based on the knowledge of the location, in the memory stack of the execution device, of the memory space allocated to variables or buffers.

Although the method presented below can be applied for securing the whole software code, for the sake of clarity the rest of the description will be focused on how the proposed method can be used to secure a first sequence of instructions performing a function that declares a plurality of local variables.

Such a declaration allocates to each variable a memory space in the memory stack of the execution device. As discussed above, if nothing is done to prevent it, the relative positions of the memory spaces of the variables will be the same at each execution of the function and this information can be leveraged by an attacker to perform a side channel analysis attack or a fault injection attack.

The main idea of the method according to the invention is to modify the software code by injecting in it additional instructions which shuffle the locations of the variables in the memory stack. In order to change the location of the variables from one execution of the function to another, these additional instructions are inserted within the code of the function itself. Therefore, each time the function is called and the variables are allocated, a new randomization is applied to their location on the memory stack.

The securing of the software code is performed by a first processor 11 of a securing device 1. It produces a secured software code SSC which can then be securely executed by the execution device 2.

Such a securing device 1 may be any electronic device including a processor. For example it may be a personal computer PC on which a development environment was installed. **Figure 1** describes an exemplary embodiment of such a securing device 1 comprising a first processor 11, a first RAM memory 12, a first communication unit 13 such as an Ethernet or Wifi network adapter, a first display 14, a first mass memory 15 such as a hard drive, and first user input interface 16. The software code SC to be secured may be stored on the first mass memory 15 of the securing device. The secure software code SSC, obtained after the securing device 1 applies the method according to the first aspect to the software code SC, can also be stored on the first memory 15.

**Figure 2** describes an exemplary embodiment of the execution device 2. For example, it may be a personal computer PC, a mobile device such as a smartphone or a tablet, or a public terminal in a bank or a point of sale. It may also be a simple chip included in a smart card or a credit card. It may comprise a second processor 21, a second RAM memory 22, a second communication unit 23 such as an Ethernet or Wifi network adapter, a second display 24, a second mass memory 25 such as a hard drive, and second user input interface 26. The secure software code SSC, to be executed by the second processor 21 of the execution device 2, may be stored on the second mass memory 25 of the executing device. In order to randomize locations in the memory stack, the execution device also needs a secure source of randomness. Therefore, it may comprise a cryptoprocessor 27 comprising a true or pseudo randomness source, such as a PRNG.

The securing device 1 and the execution device 2 may be electronic devices of similar or different types. Both devices may share the same hardware architecture, such as x86, ARM or PowerPC, or have different architectures.

The software code to be secured is a compiled code. The method according to the invention may be applied to it by a compiler at the end of the compiling process. Alternatively, in the case of an interpreted language, it may be applied by an interpreter, at runtime.

### Securing method main steps

The following paragraphs describe the steps of the method according to the first aspect of the invention, securing the software code SC and producing the secure software code SSC, as depicted on **Figure 3****.** These steps are performed by the first processor 11 of the securing device 1 and are all labeled with the letter "S" followed by the number of the step.

When needed, reference is made to steps performed by the execution device 2 when executing the secure software code SSC, after the method according to the first aspect is completed. Such execution steps are labeled with the letter "E" followed by the number of the step and depicted on **Figure 4****.**

During a first securing step S1, the first processor 11 identifies a plurality of local variables allocated in the function performed by the first sequence of instructions. The identified local variables are the ones whose location in the memory stack will be shuffled in the following steps. These variables may be the set of all the local variables used in the function. Alternatively, they may be only a subset of it. In such a case, the following step may be repeatedly applied to several subsets of variables of the function.

During a second securing step S2, the first processor 11 generates in the software code SC a second sequence of instructions, which, when executed at runtime by the second processor 21 of the execution device, performs the following operations at each call of the function after the identified local variables have been declared :
- the second sequence of instructions first determines randomly a permutation P during a first execution step E1,
- then it shuffles the locations of the memory spaces allocated in said memory stack to the identified local variables by applying to them the determined permutation during a second execution step E2.

By doing so, the memory address ranges allocated to the local variables are redistributed at random. A local variable may, by chance, keep the same memory space in the memory stack after the permutation has been applied. But it is not an issue. Indeed, the second sequence of instruction is inserted in the code in the way that makes that it gets executed at each call to the function. Therefore, a different permutation is applied to the memory spaces allocated to the variables each time the function is called. The second sequence of instruction is preferably inserted in the software code within the code part coding for the function, right after the instructions declaring the variables.

An example is given on Figure 5. Figure 5a shows a source code for a function "foo" which declares three variables a, b and c. As shown on Figure 5b, memory spaces are allocated to these variables, whose start addresses are (SP meaning Stack Pointer): SP-0xc for variable a, SP-0x8 for variable b, SP-0x4 for variable c. As shown on Figure 5c, the following permutation is applied to these memory spaces (and hence to their start addresses) at the second securing step:
a: SP-0xc => SP-0x8
b: SP-0x8 => SP-0x4
c: SP-0x4 => SP-0xc

Such a shuffling may also be applied inside the memory space allocated to a single variable. As an example, when each of the variables has a length of several bytes, shuffling the location of the memory spaces allocated to these variables may comprise, for each variable, shuffling the memory spaces corresponding to each byte of the variable.

The method according to the invention applies to variable types such as integers, reals, strings etc... but it also applies to local variables which are elements of an array. Indeed, when an array is declared, each array element is allocated a memory space in the memory stack and all array elements are allocated in the same order, by increasing index, at each call of the function. Therefore, a shuffling of the memory spaces allocated to these elements is also required. Let us consider an array C=[C₀, C₁, ..., C_{N-1}] of length N, with N an integer. In order to perform such a shuffling, the second sequence of instructions generated in the software code by the securing device may :
- determine randomly a first integer, called start, between 0 and N-1,
- determine randomly a second integer, called step, which is non-zero and coprime with N,
- determine the permutation to be applied for shuffling as P[i] := [(start+i*step) modulo N] for i in {0, ... N-1},
- shuffle the locations of the memory spaces allocated to said array elements in said memory stack by applying to them said determined permutation P.

By doing so, the memory space associated, after allocation, to the element Ci of the array will be allocated after shuffling to the element C_{start+i*step mod N} .

As an example, let consider the array C=[a,b,c]. If we use start=2 and step=2, the permutation leads to P(0)=2, P(1)=1 and P(2)=0. In this case, the memory spaces allocated to the first element 'a' and to the third element 'c' are swapped and the memory space allocated to the second element 'b' remains unchanged.

### Other aspects

**In a second aspect,** the invention also relates to a non-transitory machine-readable storage medium encoded with instructions of a secure software code for secure execution by the second processor 21 of the execution device 2 wherein said secure software code is a modified version of an unsecure software code obtained by securing said unsecure software code according to the method according to the first aspect.

This non-transitory machine-readable storage medium is also encoded with:
- a first sequence of instructions performing, when executed by the execution device 2, a function declaring a plurality of local variables to allocate a memory space of a memory stack to each local variable,
- and a second sequence of instructions, which, when executed at runtime by the second processor 21 of said execution device, at each call of the function after said local variables have been declared :
   ∘ determines randomly a permutation P,
   ∘ shuffles the locations of the memory spaces allocated to said identified local variables in said memory stack by applying to them said determined permutation.

**In a third aspect,** the invention also relates to the method of executing the instructions of the secure software code, as executed by the second processor 21 of the executing device 2. Said secure software code SSC is then a modified version of the unsecure software code (the software code SC) on which the method according to the first aspect described here above has been applied.

As depicted on figure 4, when second sequence of instructions is executed at runtime by the second processor 21 of the execution device, at each call of the function after said local variables have been declared, the method according to the third aspect comprises the following execution steps E1 to E2:
- during the first execution step E1, the second processor 21 determines randomly a permutation, for example using it cryptoprocessor 27;
- during the second execution step E2, the second processor 21 shuffles the locations of the memory spaces allocated to the local variables in the memory stack by applying to them the determined permutation.

At runtime, when the execution device executes the secure software code, and therefore executes the first, second, and possibly third, sequences of instructions discussion above, the shuffling induced by the invention shall be taken into account. In order to keep executing correctly the secure software code, the change of the location of variables on the memory stack must be taken into account when accessing, for loading, storing or any other operation accessing the memory stack, the memory spaces allocated to the variables after their shuffling. In order to do so, the permutation applied for the shuffling may be stored and applied to the address on the memory stack used as a target for the instruction to be executed.

In addition to these features, the non-transitory machine readable storage medium according to the second aspect of the invention and the method according to the third aspect of the invention may be configured for performing or may comprise any other features described here before.

As a result, the methods described above enable to change at runtime the location of variables of a function on the memory stack, which prevents an attacker from being able to predict these locations and to use it for side channel or fault injection attacks. Since this shuffling does not depend on any software action, it cannot be deactivated by an attacker. In addition, its activation in the compiled code from within the code of the function itself enables the shuffling to be different at each execution of the function.

## Claims

1. A method for securing against physical or logical attacks a software code comprising a first sequence of instructions performing, when executed by an execution device (2), a function declaring a plurality of local variables to allocate a memory space of a memory stack to each local variable,
said method being performed by a first processor (11) of a securing device (1) and comprising the steps of:
- identifying (S1) said plurality of local variables allocated in said function,
- generating (S2) in the software code a second sequence of instructions, which, when executed at runtime by a second processor (21) of said execution device, at each call of the function after said local variables have been declared
• determines (E1) randomly a permutation P,
• shuffles (E2) the locations of the memory spaces allocated in said memory stack to said identified local variables by applying to them said determined permutation.

2. The method of claim 1, wherein said local variables are elements of an array C of size N, with N an integer, and wherein said second sequence of instructions, when executed at runtime by said second processor (21) of said execution device at each call of the function after array elements have been declared:
• determines randomly a first integer, called start, between 0 and N-1,
• determines randomly a second integer, called step, which is non-zero and coprime with N,
• determines said permutation as P[i] := [(start+i*step) modulo N] for i in {0, ... N-1} ,
• shuffles the locations of the memory spaces allocated to said array elements in said memory stack by applying to them said determined permutation P.

3. The method of any of claims 1 to 2, wherein the step of generation (S2) of a second sequence of instructions is performed by a compiler compiling said software code or an interpreter interpreting it at runtime.

4. The method of any of claims 1 to 3, wherein each of said variables has a length of several bytes and wherein shuffling the locations of the memory spaces allocated to said variables (E2) comprises for each variable shuffling the memory spaces corresponding to each byte of the variable.

5. A non-transitory machine-readable storage medium encoded with instructions of a secure software code for secure execution by a second processor (21) of an execution device (2) wherein :
- said secure software code is a modified version of an unsecure software code obtained by securing said unsecure software code according to the method of any of claims 1 to 4,
- the non-transitory machine-readable storage medium is encoded with :
• a first sequence of instructions performing, when executed by an execution device (2), a function declaring a plurality of local variables to allocate a memory space of a memory stack to each local variable,
• and a second sequence of instructions, which, when executed at runtime by a second processor (21) of said execution device, at each call of the function after said local variables have been declared :
∘ determines randomly a permutation P,
∘ shuffles the locations of the memory spaces allocated to said identified local variables in said memory stack by applying to them said determined permutation.

6. A method of securely executing instructions of a secure software code by a second processor (21) of an execution device (2),
• wherein said secure software code is a modified version of an unsecure software code obtained by securing said unsecure software code according to the method of any of claims 1 to 4 and comprising said first sequence of instructions and said generated second sequence of instructions,
• and comprising, when said second sequence of instructions is executed at runtime by said second processor (21) of said execution device, at each call of the function after said local variables have been declared, the steps of:
∘ determining randomly a permutation (E1),
∘ shuffling the locations of the memory spaces allocated to said local variables in said memory stack by applying to them said determined permutation (E2).

7. An electronic device (1) comprising a processor (11) configured for performing the steps of the method of any one of claims 1 to 4.

8. An electronic device (2) configured for performing the steps of the method of claim 6 and comprising a cryptoprocessor (27) comprising a true or pseudo randomness source configured for generating said permutation and a processor (21).
